# FASCICULE DE BREVET EUROPEEN

(11) **EP 3 544 863 B1**
(45) Date de publication et mention de la délivrance du brevet: **01.07.2020**
(21) Numéro de dépôt: 17804241.2
(22) Date de dépôt: 13.11.2017
(51) Int. Cl.: B60R 25/021

(54) **DISPOSITIF ANTIVOL POUR COLONNE DE DIRECTION DE VÉHICULE AUTOMOBILE ET COLONNE DE DIRECTION COMPRENANT UN TEL DISPOSITIF**
VORRICHTUNG ZUM DIEBSTAHLSCHUTZ FÜR EINE KRAFTFAHRZEUGLENKSÄULE UND LENKSÄULE MIT DIESER VORRICHTUNG
ANTITHEFT DEVICE FOR A MOTOR VEHICLE STEERING COLUMN AND STEERING COLUMN COMPRISING THIS DEVICE

(30) Priorité: 24.11.2016 FR 1661441
(43) Date de publication de la demande: 02.10.2019
(73) Titulaire: U-Shin France, 94000 Créteil (FR)
(72) Inventeur: COUSIN, Arnaud, 58001 Nevers Cedex (FR); DESARMENIEN, Alain, 58001 Nevers Cedex (FR); DEVERNOIS, Thomas, 58001 Nevers Cedex (FR)
(74) Mandataire: Chevalier, Renaud Philippe
(86) Numéro de dépôt international: PCT/FR2017/053078
(87) Numéro de publication internationale: WO 2018/096234

(56) Documents cités:
- EP-A1- 0 952 051
- EP-A1- 2 277 749
- EP-A1- 3 002 162

## Description

La présente invention se rapporte à un dispositif antivol pour colonne de direction de véhicule automobile, et à une colonne de direction de véhicule automobile comprenant un tel dispositif antivol.

Il est connu d'utiliser un dispositif antivol pour immobiliser en rotation une colonne de direction de véhicule automobile. Le document EP952051A décrit un dispositif antivol selon le préambule de la revendication 1.

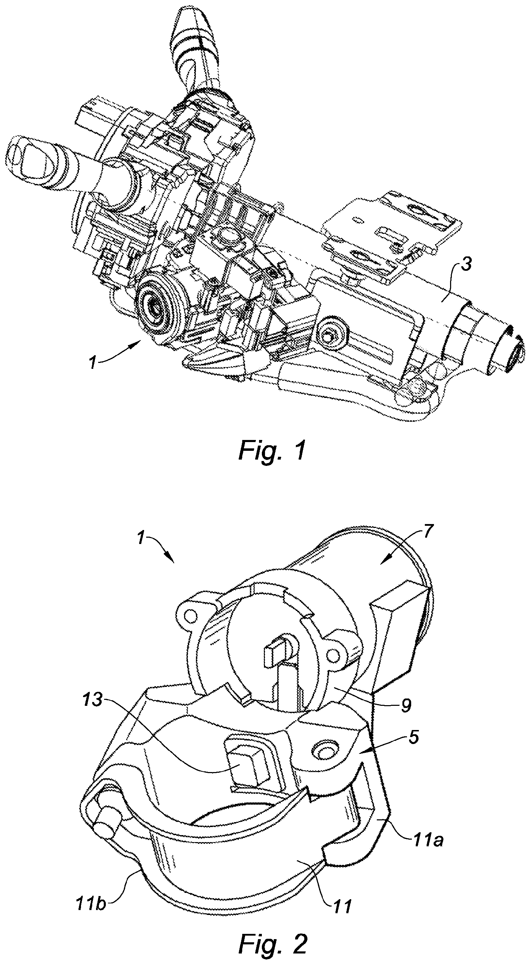

On a représenté à la figure 1 un dispositif antivol 1 de l'art antérieur, en prise avec une colonne de direction 3 d'un véhicule automobile.

A la figure 2 est représenté le dispositif antivol 1 de la figure 1. Le dispositif antivol 1 comporte un support 5 et un verrou de contact 7, solidarisé au support 5 et manipulable par un utilisateur depuis le poste de conduite.

Le support 5 comporte un corps d'antivol 9 agencé pour loger le verrou de contact 7. Le corps d'antivol peut être formé dans un matériau léger tel qu'un matériau en alliage de magnésium ou un matériau plastique.

Le support 5 comporte en outre un collier 11 solidarisé avec le corps d'antivol 9, le collier 11 comprenant deux demi-colliers 11a et 11b. Le collier 11 peut être formé dans un matériau résistant tel que le « Zamak® » (marque déposée), alliage de zinc, d'aluminium, de magnésium et de cuivre.

Le dispositif antivol 1 comporte un pêne 13, monté mobile dans le dispositif antivol. Le pêne 13 est logé en partie dans le corps d'antivol 9 du support 5 et en partie dans le collier 11.

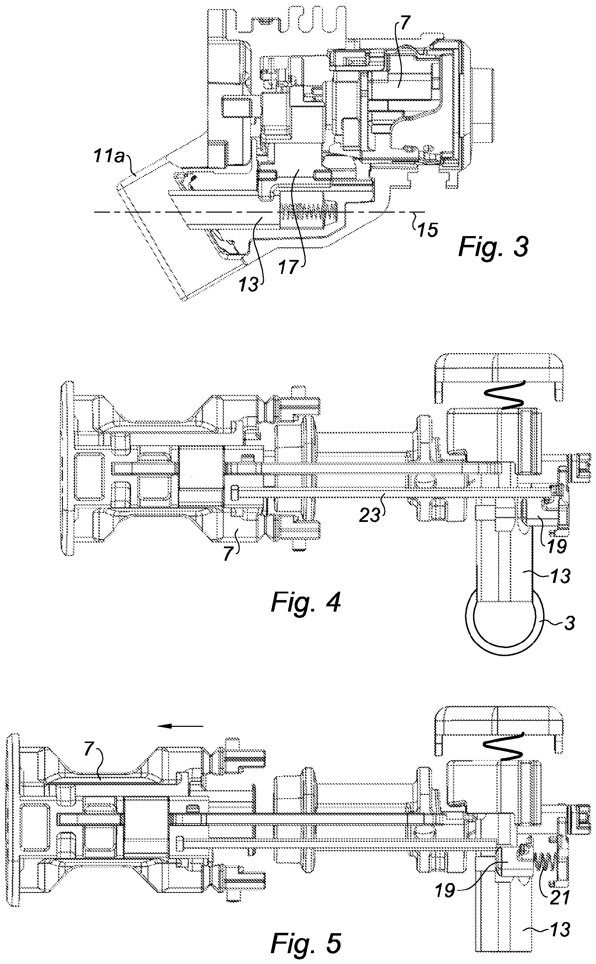

On se réfère à la figure 3 sur laquelle on a représenté le dispositif antivol 1 en vue en coupe longitudinale partielle et dans laquelle seul le demi-collier 11a est représenté.

Le pêne 13 est monté mobile en translation le long d'un axe 15 de translation du pêne. Le pêne 13 est solidaire d'un coulisseau 17 (ou navette) commandé par le verrou de contact 7.

L'immobilisation de la rotation de la colonne de direction est réalisée par le pêne 13 dont son déplacement est réalisé par l'intermédiaire du coulisseau 17 commandé par le verrou de contact 7.

Le verrou de contact 7 permet, via le coulisseau 17, de faire passer le pêne 13 alternativement entre une position de verrouillage selon laquelle le pêne bloque la rotation de la colonne de direction et une position de déverrouillage selon laquelle ledit pêne autorise la rotation de la colonne de direction.

Par un geste de malveillance, une personne pourrait désolidariser le verrou de contact du dispositif antivol afin d'accéder au coulisseau. En ayant accès à ce coulisseau, la personne malveillante pourrait déplacer le pêne depuis sa position de verrouillage dans laquelle il bloque la colonne de direction vers sa position de déverrouillage dans laquelle il autorise une rotation de la colonne de direction.

Pour limiter cet inconvénient, il a été proposé dans le document WO 2012/028324 d'équiper le dispositif antivol d'un moyen de supercondamnation, configuré pour bloquer le pêne en position condamnée en cas de tentative d'effraction lorsqu'une personne malveillante arrache le verrou de contact afin d'accéder au coulisseau solidaire du pêne.

On a représenté à la figure 4 le dispositif antivol du document WO 2012/028324 illustré en position de repos. Le moyen de supercondamnation du dispositif antivol comporte un élément de blocage 19 du pêne 13, en prise avec un moyen élastique 21 (visible à la figure 5) travaillant en compression, l'élément de blocage 19 étant retenu dans une position passive par un organe de retenue 23 fixé au verrou de contact 7, autorisant le déplacement du pêne dans la colonne de direction 3.

En cas de tentative d'effraction, le verrou de contact 7 est arraché par la personne malveillante, comme représenté à la figure 5, entraînant alors simultanément le déplacement de l'organe de retenue 23. L'élément de blocage 19 est alors sollicité contre le pêne 13 par le moyen élastique 21, bloquant alors le pêne 13 dans la colonne de direction (non représentée sur cette figure). Le dispositif antivol se trouve alors dans une position supercondamnée.

Le moyen de supercondamnation décrit dans ce document de l'art antérieur est en outre adapté pour entraîner l'élément de blocage selon deux déplacements successifs de direction distincte lors d'une désolidarisation du verrou de contact 7 du reste du dispositif antivol, ceci afin que l'élément de blocage ne puisse plus retourner simplement dans sa position initiale passive.

Un inconvénient de ce dispositif est qu'il demeure réversible. En effet, en exécutant deux déplacements successifs inverses de l'élément de blocage, par exemple grâce à un outil de profil adapté, une personne mal intentionnée parviendrait à repousser l'élément de blocage dans sa position passive, de sorte à le désengager du pêne.

Par ailleurs, lorsque l'on souhaite désolidariser le verrou de contact 7 du dispositif antivol à des fins de maintenance, l'organe de retenue 23, fixé au verrou de contact 7, libère également l'élément de blocage 19, qui est alors sollicité contre le pêne 13 par le moyen élastique 21, comme lors d'une tentative d'effraction, bloquant ainsi le pêne 13 dans la colonne de direction. Le dispositif antivol se trouve alors dans sa position supercondamnée. L'agencement de ce dispositif antivol de l'art antérieur se trouve donc peu adapté à sa maintenance, en ce que le verrou de ce dispositif antivol ne peut être monté et démonté à volonté sans déclencher le mécanisme de supercondamnation.

La présente invention vise à résoudre les inconvénients de l'art antérieur en fournissant un dispositif antivol irréversible et dont le verrou de contact est capable d'être démonté et remonté à volonté sans déclencher le mécanisme de supercondamnation.

Pour ce faire, la présente invention concerne un dispositif antivol pour colonne de direction de véhicule automobile tel que défini par la revendication 1. Il comprend
- un support, comprenant :
   - un corps d'antivol, et
   - un collier, fixé au corps d'antivol,
- un pêne, logé en partie dans le collier, monté mobile en translation dans le dispositif antivol le long d'un axe de translation du pêne, alternativement entre une position de verrouillage selon laquelle ledit pêne bloque la rotation de la colonne de direction et une position de déverrouillage selon laquelle ledit pêne autorise la rotation de la colonne de direction,
- un verrou de contact, solidaire du support du dispositif antivol et agencé pour déplacer le pêne alternativement entre ladite position de verrouillage et ladite position de déverrouillage, ledit verrou de contact étant manipulable par un utilisateur.

Le dispositif antivol de l'invention est remarquable en ce qu'il comprend un organe de supercondamnation du pêne, monté dans le support du dispositif antivol en compression le long d'au moins un axe sensiblement orthogonal à l'axe de translation du pêne et maintenu comprimé au moins par une paroi périphérique dudit verrou, définissant une position de repos du dispositif antivol selon laquelle l'organe de supercondamnation autorise un déplacement du pêne, l'organe de supercondamnation étant en outre conçu pour se détendre lors d'une désolidarisation du verrou de contact et du support du dispositif antivol et pour bloquer la translation dudit pêne, de façon à définir une position de supercondamnation du dispositif antivol.

Ainsi, en prévoyant de monter l'organe de supercondamnation du pêne dans le dispositif antivol en compression le long d'au moins un axe sensiblement orthogonal à l'axe de translation du pêne, et en prévoyant de concevoir l'organe de supercondamnation de façon à ce qu'il se détendre lors d'une désolidarisation du verrou de contact et du support du dispositif antivol de sorte qu'il bloque la translation du pêne, une personne malveillante qui cherche à déplacer le pêne ne dispose plus d'aucun moyen pour contraindre à nouveau l'organe de supercondamnation afin de le positionner à nouveau dans le dispositif antivol dans une position telle qu'il autoriserait le déplacement du pêne. L'agencement de la rainure dans le dispositif antivol permet de renforcer le maintien en position supercondamnée du dispositif antivol.

Selon des caractéristiques optionnelles de l'invention :
- l'organe de supercondamnation est monté en compression selon un axe de direction sensiblement transverse à l'axe de translation du pêne et selon un axe de direction sensiblement perpendiculaire à l'axe de translation du pêne. Cela permet à l'organe de supercondamnation de se détendre selon deux directions lors d'une désolidarisation du verrou de contact et du support du dispositif, ce qui augmente la fiabilité du dispositif antivol ;
- l'organe de supercondamnation est en outre conçu pour se translater au moins partiellement à l'extérieur du support du dispositif antivol lors d'une désolidarisation du verrou de contact et du support du dispositif antivol. En se translatant au moins partiellement à l'extérieur du support du dispositif antivol lors d'une désolidarisation du verrou de contact et du support du dispositif antivol, l'organe de supercondamnation se trouve être le seul ensemble du dispositif antivol accessible par une personne malveillante ;
- l'organe de supercondamnation est élastique et présente un module d'élasticité compris entre 100 MPa et 300 MPa ;
- la rainure est reliée à un fond du collier du support par un chanfrein. La présence d'un chanfrein entre le fond du collier et la rainure permet de faciliter le déplacement de l'organe de supercondamnation entre sa position de repos et sa position supercondamnée ;
- l'organe de supercondamnation présente au moins une zone fusible conçue pour rompre l'organe de supercondamnation lorsqu'une force de traction est exercée sur l'organe de supercondamnation. L'utilisation d'une zone fusible sur l'organe de supercondamnation est avantageuse en ce qu'elle permet une rupture de l'organe de supercondamnation lorsqu'une personne malveillante cherche à déverrouiller le pêne. En effet, la personne malveillante qui arrache le verrou de contact ne voit depuis le poste de conduite que l'organe de supercondamnation qui s'est partiellement translaté à l'extérieur du support du dispositif antivol. Ainsi, si la personne malveillante exerce une force de traction sur l'organe de supercondamnation, celui-ci se rompt aussitôt et maintient le dispositif antivol en position supercondamnée ;
- l'organe de supercondamnation consiste en un câble métallique, préférentiellement en acier. En prévoyant un câble unique pour réaliser l'organe de supercondamnation, on simplifie considérablement par rapport à l'art antérieur la réalisation de cet organe de supercondamnation. La masse du dispositif antivol se trouve en outre également réduite par rapport à l'art antérieur ;
- le câble métallique est en appui tangentiel sur la paroi périphérique du verrou de contact lorsque le dispositif antivol est en position de repos, ce qui constitue un moyen simple de ne plus contraindre le câble lors d'une désolidarisation du verrou de contact et du support du dispositif antivol ;
- le corps du support dudit dispositif est en plastique, et le collier du support dudit dispositif est en matériau « Zamak® ».

L'invention concerne encore une colonne de direction pour véhicule automobile, remarquable en ce qu'elle comprend un dispositif antivol selon l'une quelconque des revendications 1 à 9.

D'autres caractéristiques et avantages de l'invention apparaîtront à la lecture de la description détaillée qui suit pour la compréhension de laquelle on se reportera aux dessins annexés dans lesquels :
- la figure 1 illustre un premier dispositif antivol de l'art antérieur, monté sur une colonne de direction d'un véhicule ;
- la figure 2 représente le dispositif antivol de la figure 1, en vue isométrique ;
- la figure 3 est une vue en coupe longitudinale partielle du dispositif antivol de l'art antérieur ;
- la figure 4 illustre un deuxième dispositif antivol de l'art antérieur dans une position de repos ;
- la figure 5 représente le dispositif antivol de l'art antérieur représenté à la figure 4, en position supercondamnée ;
- la figure 6 illustre le dispositif antivol selon l'invention ;
- la figure 7 est une vue en coupe longitudinale partielle du dispositif antivol de l'invention ;
- la figure 8 illustre le mécanisme d'actionnement du pêne ;
- la figure 9 illustre le dispositif antivol de l'invention en vue isométrique ;
- la figure 10 est une vue agrandie de la figure 9 ;
- la figure 11 illustre le dispositif antivol de l'invention, centré sur le verrou de contact et vu selon un axe longitudinal du verrou de contact ;
- la figure 12 représente le dispositif antivol de l'invention dans une position de supercondamnation ;
- la figure 13 illustre l'organe de supercondamnation reposant sur le fond du dispositif antivol ;
- la figure 14 représente la cinématique de détente de l'organe de supercondamnation ;
- la figure 15 représente le dispositif antivol de l'invention sur lequel le verrou de contact a été arraché ;
- la figure 16 est une vue de face de la figure 15 ;
- la figure 17 illustre la zone fusible de l'organe de supercondamnation ;
- les figures 18 à 20 illustrent un exemple de réalisation de l'organe de supercondamnation, représenté en position de repos ;
- les figures 21 et 22 représentent la mise en contrainte de l'organe de supercondamnation.

Sur l'ensemble des figures, des références identiques ou analogues représentent des organes ou ensembles d'organes identiques ou analogues.

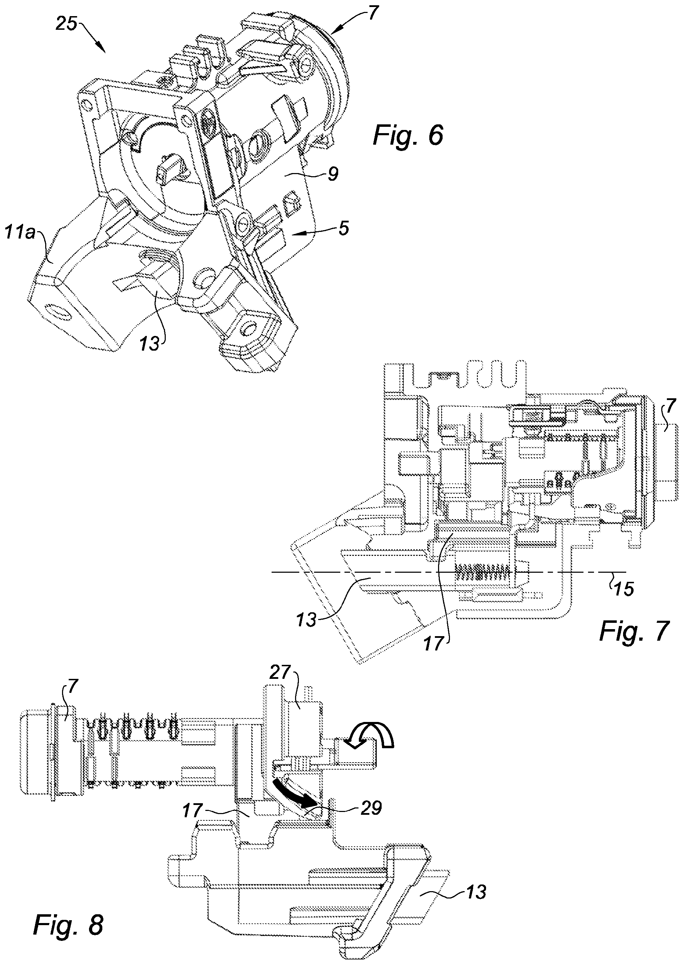

On se réfère à la figure 6 illustrant le dispositif antivol de l'invention. Comme pour le dispositif antivol 1 des figures 1 à 3, le dispositif antivol 25 de l'invention comporte un support 5 et un verrou de contact 7, solidarisé au support 5 et manipulable par un utilisateur depuis le poste de conduite.

Le support 5 comporte un corps d'antivol 9 agencé pour loger le verrou de contact 7. Le corps d'antivol peut être formé dans un matériau léger tel qu'un matériau en alliage de magnésium ou un matériau plastique.

Le support 5 comporte en outre un collier 11 fixé au corps d'antivol 9, le collier 11 comprenant deux demi-colliers 11a et 11b (seul le demi-collier 11a est illustré sur cette figure). Le collier 11 peut être formé dans un matériau résistant tel que le « Zamak® » (marque déposée), alliage de zinc, d'aluminium, de magnésium et de cuivre.

Le dispositif antivol 1 comporte un pêne 13, monté mobile dans le dispositif antivol. Le pêne 13 est logé en partie dans le corps d'antivol 9 du support 5 et en partie dans le collier 11.

On se réfère à la figure 7 illustrant le dispositif antivol 25 de l'invention. Comme discuté en référence au dispositif antivol 1 de l'art antérieur, le pêne 13 est monté mobile en translation le long d'un axe 15 de translation du pêne. Le pêne 13 est solidaire d'un coulisseau 17 (ou navette) commandé par le verrou de contact 7.

L'immobilisation de la rotation de la colonne de direction est réalisée par le pêne 13 dont son déplacement est réalisé par l'intermédiaire du coulisseau 17 commandé par le verrou de contact 7.

On se réfère à la figure 8 illustrant le mécanisme d'actionnement du mouvement du pêne 13. Pour une meilleure visibilité, le corps d'antivol 9 a été occulté en partie. De façon connue, le verrou de contact 7 reçoit une came 27 présentant une pente 29. La pente 29 de la came est montée en prise avec un bord arrondi du coulisseau 17. La rotation de la came 27 est commandée par la rotation de la clé dans le barillet du verrou de contact 7. La rotation de la came 27 entraîne, grâce à sa pente 29 en prise avec le bord arrondi du coulisseau 17, la translation du coulisseau 17.

Le déplacement du coulisseau 17, solidaire du pêne 13, commande la translation du pêne 13 le long de son axe de translation, alternativement entre une position de verrouillage selon laquelle le pêne bloque la rotation de la colonne de direction (non représentée) avec laquelle le pêne 13 est en prise et une position de déverrouillage selon laquelle le pêne autorise la rotation de la colonne de direction. Ainsi, l'actionnement du verrou de contact 7 permet, via le coulisseau 17, de faire passer le pêne 13 alternativement entre sa position de verrouillage et sa position de déverrouillage.

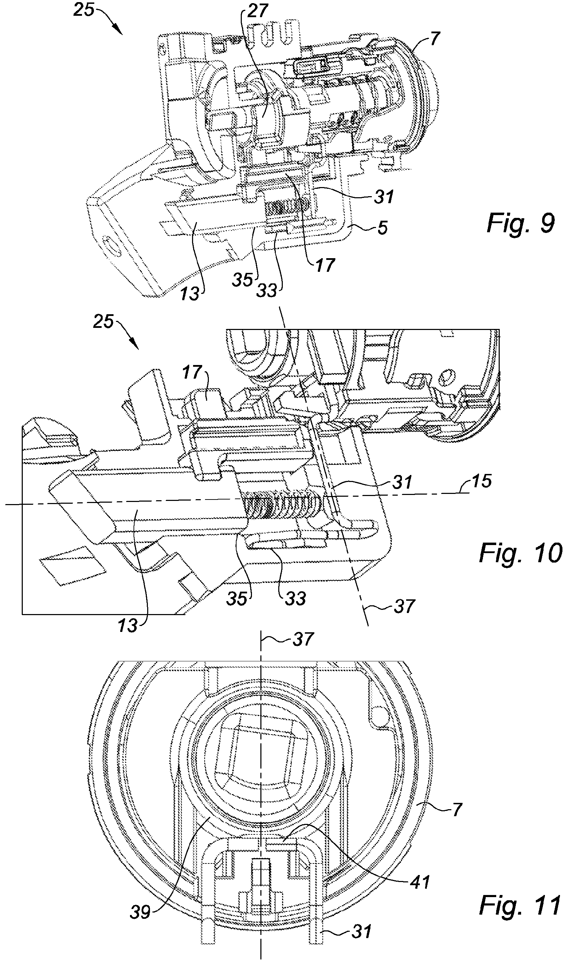

On se réfère à présent à la figure 9 illustrant le dispositif antivol 25 en vue isométrique. Selon l'invention, le dispositif antivol comprend un organe de supercondamnation 31 du pêne 13, conçu pour maintenir le pêne 13 dans sa position de verrouillage en cas de tentative d'effraction, généralement caractérisée par l'arrachement du verrou de contact du dispositif antivol.

Dans une position de repos du dispositif antivol 25, l'organe de supercondamnation 31 est monté dans le support 5 du dispositif antivol 25. Dans cette position de repos, l'organe de supercondamnation 31 repose dans un fond 33 du collier 11 du support 5 du dispositif antivol 25.

Comme représenté à la figure 10 représentant un agrandissement de la figure 9, le fond 33 présente un épaulement 35 sur lequel repose le pêne 13.

L'épaulement 35 est conformé pour permettre au pêne 13 de se translater 13 le long de son axe de translation 15, lorsque le coulisseau 17 est entraîné en translation.

Ainsi, lorsque le dispositif antivol se trouve dans sa position de repos, l'organe de supercondamnation 31 autorise un déplacement du pêne 13.

Selon l'invention, l'organe de supercondamnation 31 est monté en compression le long d'au moins un axe sensiblement orthogonal à l'axe de translation 15 du pêne 13.

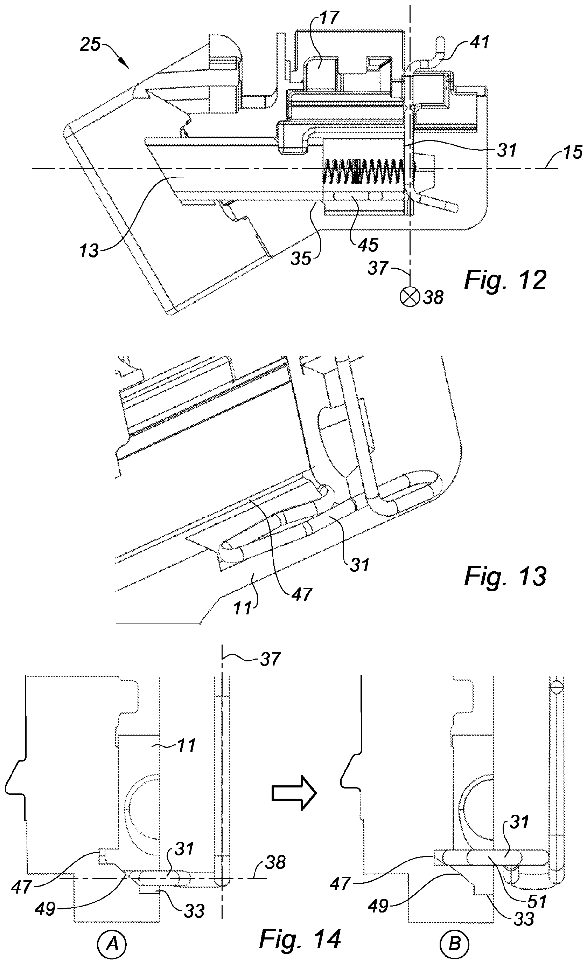

Par l'expression « monté en compression le long d'au moins un axe sensiblement orthogonal à l'axe de translation 15 du pêne 13 », on comprendra dans la description et dans les revendications que l'organe de supercondamnation 31 est monté comprimé dans le support du dispositif antivol, le long d'un axe sensiblement orthogonal à l'axe de translation du pêne, cet axe orthogonal à l'axe de translation du pêne pouvant être un axe 37 de direction sensiblement perpendiculaire à l'axe de translation du pêne, ou un axe 38 (visible à la figure 12) de direction sensiblement transverse à l'axe de translation du pêne.

On se réfère à la figure 11 illustrant le dispositif antivol centré sur le verrou de contact et vu selon un axe longitudinal du verrou de contact sensiblement parallèle à l'axe de translation du pêne.

Le maintien de l'organe de supercondamnation 31 dans sa position comprimée le long de l'axe 37 est obtenu par appui de l'organe de supercondamnation 31 sur une paroi périphérique 39 du verrou de contact 7.

En position de repos, l'organe de supercondamnation 31 est ainsi comprimé le long de l'axe 37 sensiblement perpendiculaire à l'axe de translation 15 du pêne et sa portion extrême 41 vient en appui contre la paroi périphérique 39 du verrou de contact 7.

Dès lors, lorsque l'organe de supercondamnation 31 est monté dans le dispositif antivol 25, il demeure dans sa position de repos selon laquelle il autorise le déplacement du pêne 13, tant que le verrou de contact 7 est solidaire du support 5 du dispositif antivol.

On se réfère à présent à la figure 12 sur laquelle on a représenté le dispositif antivol 25 dans une position de supercondamnation.

Selon l'invention, l'organe de supercondamnation 31 est conçu pour se détendre lorsque le verrou de contact est désolidarisé du support du dispositif antivol, par exemple lorsqu'une personne malveillante cherche à accéder au coulisseau 17 afin de déplacer le pêne 13 depuis sa position de verrouillage selon laquelle il bloque la rotation de la colonne de direction vers sa position de déverrouillage selon laquelle il autorise la translation du pêne.

Lorsque le verrou de contact est désolidarisé du support du dispositif antivol, l'organe de supercondamnation 31, qui se trouvait comprimé par la paroi périphérique du verrou de contact, se détend.

L'organe de supercondamnation 31 se translate le long de l'axe 37 perpendiculaire à l'axe de translation 15 du pêne 13. L'organe de supercondamnation 31 présente alors une portion extrême 41 qui s'étend à l'extérieur du support du dispositif antivol.

En se translatant le long de l'axe 37, une portion 45 de l'organe de supercondamnation 31 se retrouve au dessus-de l'épaulement 35 sur lequel repose le pêne 13. L'organe de supercondamnation 31 se trouve ainsi en face du pêne 13, et bloque la translation du pêne. Le dispositif antivol 25 est alors dans une position de supercondamnation.

Afin de renforcer le maintien en position supercondamnée du dispositif antivol, le collier 11 du support 5 du dispositif antivol 25 comporte une rainure 47 visible aux figures 13 et 14 auxquelles on se réfère à présent, la figure 14 illustrant l'ensemble de la figure 13 en vue de côté.

La rainure 47 s'étend dans une direction sensiblement parallèle à l'axe de translation 15 du pêne. La rainure 47 est conformée pour recevoir une portion de l'organe de supercondamnation 31 lorsque le dispositif antivol se trouve dans une position de supercondamnation.

Afin de permettre à l'organe de supercondamnation 31 de rejoindre en partie la rainure 47 lorsque le verrou de contact est désolidarisé du support du dispositif antivol, l'organe de supercondamnation est monté dans le dispositif antivol également en compression dans une direction sensiblement transverse à l'axe de translation du pêne, selon l'axe 38 défini en référence à la figure 12.

La rainure 47 est reliée au fond 33 du collier 11 par un chanfrein 49 permettant de faciliter le déplacement de l'organe de supercondamnation entre sa position de repos illustré à l'étape A de la figure 14, et sa position supercondamnée illustrée par l'étape B de la figure 14.

Lorsque le dispositif antivol est en position de repos, position illustrée à la figure 14 par l'étape A, l'organe de supercondamnation 31 repose sur le fond 33 du collier 11.

Comme discuté précédemment, lorsque l'organe de supercondamnation 31 se détend, à la suite d'une désolidarisation du verrou de contact et du support du dispositif antivol intervenant lorsqu'une personne malveillante arrache le verrou de contact, l'organe de supercondamnation 31 se translate le long de l'axe perpendiculaire 37 à l'axe de translation du pêne.

En se translatant, le chanfrein 49 reliant le fond 33 du collier à la rainure 47 autorise une détente de l'organe de supercondamnation 31 selon l'axe 38 sensiblement transverse à l'axe de translation du pêne.

Comme représenté par l'étape B de la figure 14, l'organe de supercondamnation 31 termine sa course en translation lorsqu'il rencontre la rainure 47.

Ainsi, lorsque le dispositif antivol se trouve en position supercondamnée, la rainure 47 reçoit une portion 51 de l'organe de supercondamnation 31.

La rainure ainsi agencée dans le dispositif antivol de l'invention permet avantageusement d'augmenter la sécurité du dispositif, en ce que la rainure permet de maintenir l'organe de supercondamnation dans sa position selon laquelle il empêche la translation du pêne.

A noter que lorsque l'on souhaite désolidariser le verrou de contact pour effectuer une opération de maintenance, on insère la clé dans le verrou de contact et on exerce une rotation.

La rotation de la clé entraîne la rotation de la came 27 (visible en figure 9). La came 27 entraîne en translation le coulisseau 17 qui déplace le pêne dans sa position de déverrouillage.

Le pêne se trouve alors au-dessus de l'organe de supercondamnation 31, dans le prolongement de l'épaulement 35. Dans cette position, le pêne 17 empêche la translation de l'organe de supercondamnation 31 le long de l'axe 37 perpendiculaire à l'axe de translation du pêne.

Ainsi, contrairement aux dispositifs de l'art antérieur, on peut avantageusement procéder au démontage du verrou de contact sans déclencher le mécanisme de supercondamnation. Le verrou de contact peut ainsi être démonté et remonté à volonté sans déclencher le mécanisme de supercondamnation

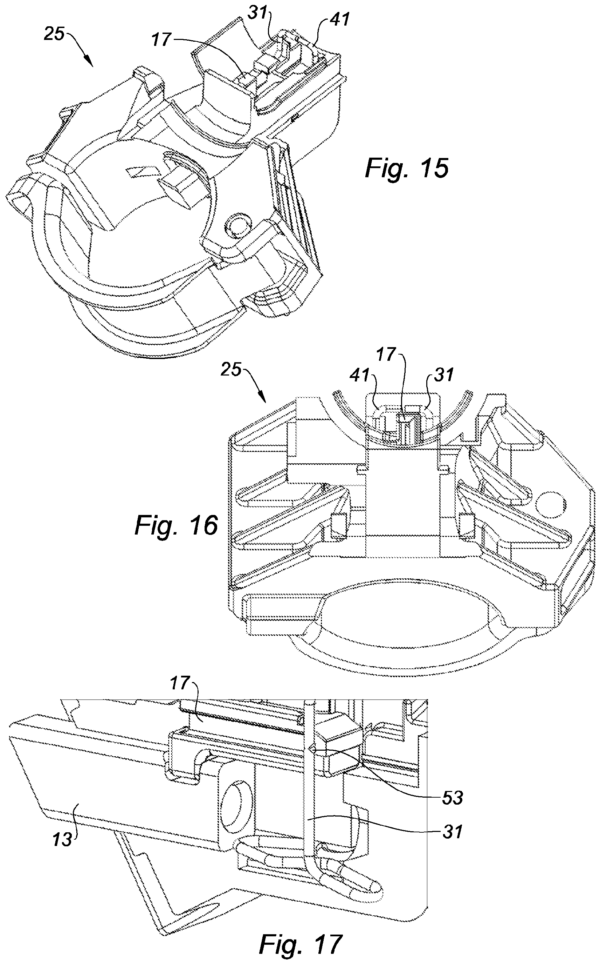

On se réfère à présent aux figures 15 et 16 illustrant le dispositif antivol en position supercondamnée, sur lequel une personne malveillante a arraché le verrou de contact.

Lorsque le dispositif antivol se trouve en position supercondamnée suite à une désolidarisation du verrou de contact du support du dispositif antivol, la portion 41 de l'organe de supercondamnation 31 est accessible depuis le poste de conduite.

L'organe de supercondamnation 31 est avantageusement pourvu d'une zone fusible 53, visible à la figure 17. La zone fusible 53 est conçue pour rompre l'organe de supercondamnation 31, au niveau de la zone fusible 53, lorsqu'une force de traction est exercée sur l'organe de supercondamnation 31.

Ainsi, lorsque la personne malveillante cherchant à accéder au coulisseau 17 exerce une force de traction sur l'organe de supercondamnation accessible depuis le poste de conduite d'un véhicule, l'organe de supercondamnation 31 se rompt et maintient le dispositif antivol en position supercondamnée selon laquelle l'organe de supercondamnation bloque la translation du pêne 13.

L'organe de supercondamnation se trouve alors détendu, relativement à son état de compression initial, selon l'axe 37 perpendiculaire à l'axe de translation du pêne et selon l'axe 38 transverse à l'axe de translation du pêne. La portion 51 de l'organe de supercondamnation est par ailleurs maintenue immobile dans le dispositif antivol grâce à la rainure 47.

La personne malveillante ne dispose alors d'aucun moyen pour contraindre à nouveau l'organe de supercondamnation afin de le positionner dans le dispositif antivol dans une position telle qu'il autoriserait le déplacement du pêne.

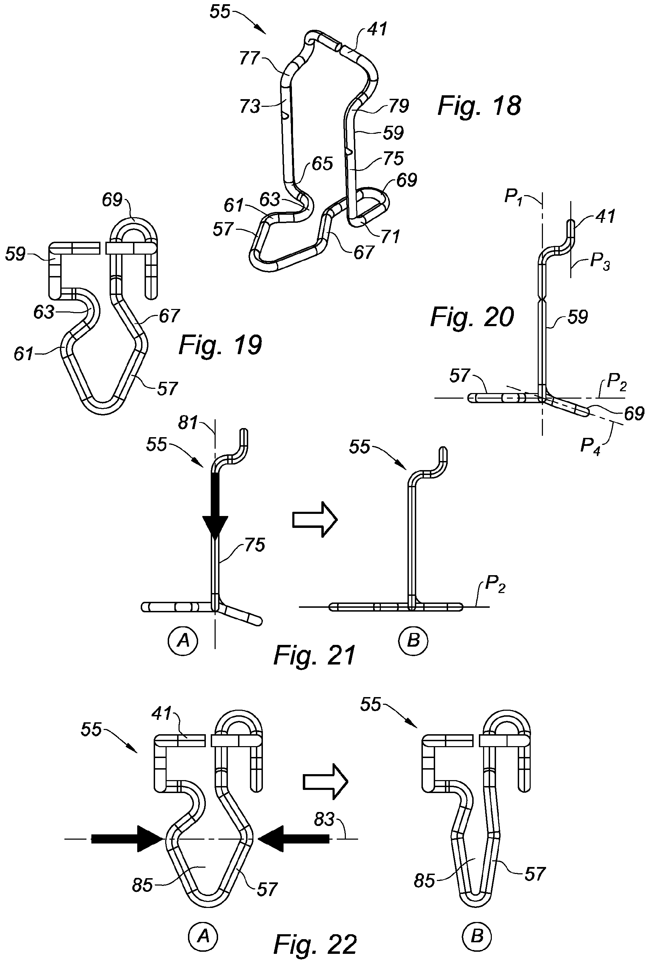

On se réfère à présent aux figures 18 à 22 sur lesquelles on a représenté un exemple de réalisation non limitatif de l'organe de supercondamnation 29 selon l'invention.

Selon cet exemple de réalisation, l'organe de supercondamnation 29 consiste en un câble métallique 55. Le câble métallique est de préférence réalisé en acier. La section du câble métallique est de préférence circulaire. Le câble métallique est élastique. Il présente un module d'élasticité compris entre 100 MPa et 300 MPa.

Comme représenté à la figure 18 ainsi qu'à la figure 19 illustrant le câble 55 en vue de dessous, le câble 55 présente une base 57 et une extension 59.

La base 57 adopte une forme de « V » présentant, à l'une de ses extrémités 61, une portion 63 en forme de « U » rejoignant une première embase 65 de l'extension 59, et à l'autre de ses extrémités 67, un prolongement 69 en forme de « U retourné » et reliant une deuxième embase 71 de l'extension 59.

L'extension 59 présente quant à elle la forme d'un « U retourné ». L'extension 59 est reliée à la base 57 par l'intermédiaire des embases 65 et 71.

Comme représenté aux figures 18 et 20, l'extension 59 comporte deux bras 73 et 75 sensiblement parallèles entre eux et qui s'inscrivent dans un plan P₁ sensiblement perpendiculaire à un plan P₂ défini par la base 57 du câble 55. Chaque bras 73, 75 est relié à la portion extrême 41 du câble qui est destiné à venir au contact de la paroi périphérique 39 du verrou de contact 7 (figure 11) par l'intermédiaire de coudes 77, 79. La portion extrême 41 du câble s'inscrit quant à elle dans un plan P₃ également sensiblement perpendiculaire au plan P₂.

En position de repos du câble, c'est-à-dire lorsqu'il n'est pas mis sous contrainte avant intégration dans le dispositif antivol, le prolongement 69 de la base 57 s'inscrit dans un plan P₄ incliné de quelques degrés par rapport au plan P₂.

A l'étape A de la figure 21 est représenté le câble 55 en position de repos.

A l'étape B, le câble 55 a été contraint le long d'un axe 81 sensiblement parallèle à un axe longitudinal du bras 75 de l'extension 59, correspondant à l'axe 37 (visible à la figure 12) perpendiculaire à l'axe de translation du pêne.

Après cette mise sous contrainte, le prolongement 69 de la base 57 s'inscrit dans le plan P₂ défini par la base 57.

De la même manière, à l'étape A de la figure 22 est représenté le câble 55 en position de repos ou préalablement contraint le long de l'axe 81.

A l'étape B de la figure 22, la base 57 du câble 55 a été contrainte le long d'un axe 83 sensiblement transverse à l'axe 81 (l'axe 83 étant aussi sensiblement parallèle à l'axe longitudinal de la portion extrême 41 du câble). L'axe 83 correspond à l'axe 38 (visible à la figure 12) transverse à l'axe de translation du pêne.

Une fois contraint le long de l'axe 83, la surface définie par l'espace intérieur 85 de la base 57 se trouve réduite par rapport celle définie lorsque le câble est en position de repos.

Lorsque le câble 55 a été contraint le long de l'axe 81 et le long de l'axe 83, il est disposé à l'intérieur du support du dispositif antivol, de façon à ce que sa base 57 repose sur le fond 33 du collier (figure 10), et de façon à ce que sa portion extrême 41 vienne en appui tangentiel sur la paroi périphérique 39 du verrou de contact 7 (figure 11).

Comme il va de soi, la présente invention ne se limite pas aux seules formes de réalisation de ce dispositif antivol et de la colonne de direction comprenant un tel dispositi antivol, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

Il convient de noter à cet effet que l'exemple de réalisation de l'organe de supercondamnation, donné aux figures 18 à 22, n'est pas limitatif tant dans sa forme géométrique que dans son agencement dans le dispositif antivol.

A cet effet, l'organe de supercondamnation peut être non élastique. Il peut être selon cette variante monté en compression dans le dispositif antivol par l'intermédiaire de moyens élastiques adaptés.

## Revendications

1. Dispositif antivol (25) pour colonne de direction (3) de véhicule automobile comprenant :
- un support (5), comprenant :
• un corps d'antivol (9), et
• un collier (11), fixé au corps d'antivol,
- un pêne (13), logé en partie dans le collier, monté mobile en translation dans le dispositif antivol le long d'un axe de translation (15) du pêne, alternativement entre une position de verrouillage selon laquelle ledit pêne (13) bloque la rotation de la colonne de direction et une position de déverrouillage selon laquelle ledit pêne autorise la rotation de la colonne de direction,
- un verrou de contact (7), solidaire du support (5) du dispositif antivol et agencé pour déplacer le pêne (13) alternativement entre ladite position de verrouillage et ladite position de déverrouillage, ledit verrou de contact (7) étant manipulable par un utilisateur,
- un organe de supercondamnation (31) du pêne, monté dans le support du dispositif antivol en compression le long d'au moins un axe (37, 38) sensiblement orthogonal à l'axe de translation (15) du pêne (13) et maintenu comprimé au moins par une paroi périphérique (39) dudit verrou (7), définissant une position de repos du dispositif antivol selon laquelle l'organe de supercondamnation (31) autorise un déplacement du pêne (13), l'organe de supercondamnation (31) étant en outre conçu pour se détendre lors d'une désolidarisation du verrou de contact (7) et du support (5) du dispositif antivol et pour bloquer la translation dudit pêne (13), de façon à définir une position de supercondamnation du dispositif antivol,
le dispositif antivol (25) étant **caractérisé en ce que** le collier du support (5) dudit dispositif comporte une rainure (47) s'étendant dans une direction sensiblement parallèle à l'axe de translation (15) du pêne (13), recevant une portion (51) de l'organe de supercondamnation (31) lorsque le dispositif antivol est en position de supercondamnation.

2. Dispositif antivol (25) selon la revendication 1, **caractérisé en ce que** l'organe de supercondamnation (31) est monté en compression selon un axe (38) de direction sensiblement transverse à l'axe de translation (15) du pêne (13) et selon un axe (37) de direction sensiblement perpendiculaire audit axe de translation (15) du pêne.

3. Dispositif antivol (25) selon l'une des revendications 1 ou 2, **caractérisé en ce que** l'organe de supercondamnation (31) est en outre conçu pour se translater au moins partiellement à l'extérieur du support (5) du dispositif antivol lors d'une désolidarisation du verrou de contact (7) et du support (5) du dispositif antivol.

4. Dispositif antivol (25) selon l'une quelconque des revendications 1 à 3, **caractérisé en ce que** l'organe de supercondamnation (31) est élastique et présente un module d'élasticité compris entre 100 MPa et 300 MPa.

5. Dispositif antivol (25) selon l'une quelconque des revendications 1 à 4, **caractérisé en ce que** la rainure (47) est reliée à un fond (33) du collier (11) du support (5) par un chanfrein (49).

6. Dispositif antivol (25) selon l'une quelconque des revendications 1 à 5, **caractérisé en ce que** l'organe de supercondamnation (31) présente au moins une zone fusible (53) conçue pour rompre l'organe de supercondamnation (31) lorsqu'une force de traction est exercée sur l'organe de supercondamnation.

7. Dispositif antivol (25) selon l'une quelconque des revendications 1 à 6, **caractérisé en ce que** l'organe de supercondamnation (31) consiste en un câble (55) métallique, préférentiellement en acier.

8. Dispositif antivol (25) selon la revendication 7, **caractérisé en ce que** le câble (55) métallique est en appui tangentiel sur la paroi périphérique (39) du verrou de contact (7) lorsque le dispositif antivol est en position de repos.

9. Dispositif antivol (25) selon l'une quelconque des revendications 1 à 8, **caractérisé en ce que** le corps (9) du support (5) dudit dispositif est en plastique et **en ce que** le collier (11) du support dudit dispositif est en matériau « Zamak® ».

10. Colonne de direction (3) pour véhicule automobile, **caractérisée en ce qu'**elle comprend un dispositif antivol (25) selon l'une quelconque des revendications 1 à 9.

## Patentansprüche

1. Vorrichtung zum Diebstahlschutz (25) für eine Lenksäule (3) eines Kraftfahrzeugs, umfassend:
- eine Halterung (5), umfassend:
• einen Diebstahlschutzkörper (9) und
• einen Kragen (11), der an dem Diebstahlschutzkörper fixiert ist,
- einen Riegel (13), der teilweise in dem Kragen untergebracht ist, der verschiebbar in der Vorrichtung zum Diebstahlschutz entlang einer Translationsachse (15) des Riegels montiert ist, alternativ zwischen einer Verriegelungsposition, gemäß derer der Riegel (13) die Drehung der Lenksäule blockiert, und einer Entriegelungsposition, gemäß derer der Riegel die Drehung der Lenksäule zulässt,
- ein Kontaktschloss (7), das mit der Halterung (5) der Vorrichtung zum Diebstahlschutz fest verbunden ist und angeordnet ist, um den Riegel (13) alternativ zwischen der Verriegelungsposition und der Entriegelungsposition zu verschieben, wobei das Kontaktschloss (7) von einem Benutzer betätigbar ist,
- ein Verklemmungselement (31) des Riegels, das in der Halterung der Vorrichtung zum Diebstahlschutz gepresst entlang mindestens einer Achse (37, 38), die im Wesentlichen senkrecht zur Translationsachse (15) des Riegels (13) verläuft, montiert ist und mindestens durch eine umlaufende Wand (39) des Schlosses (7) komprimiert gehalten wird, wodurch eine Ruheposition der Vorrichtung zum Diebstahlschutz definiert wird, gemäß derer das Verklemmungselement (31) eine Verschiebung des Riegels (13) zulässt, wobei das Verklemmungselement (31) des Weiteren ausgestaltet ist, sich bei einer Loslösung des Kontaktschlosses (7) und der Halterung (5) von der Vorrichtung zum Diebstahlschutz zu entspannen und die Verschiebung des Riegels (13) zu blockieren, sodass eine Verklemmungsposition der Vorrichtung zum Diebstahlschutz definiert wird,
wobei die Vorrichtung zum Diebstahlschutz (25) **dadurch gekennzeichnet ist, dass** der Kragen der Halterung (5) der Vorrichtung eine Rille (47) umfasst, die sich in einer Richtung im Wesentlichen parallel zu der Translationsachse (15) des Riegels (13) erstreckt, die einen Abschnitt (51) des Verklemmungselements (31) aufnimmt, wenn sich die Vorrichtung zum Diebstahlschutz in Verklemmungsposition befindet.

2. Vorrichtung zum Diebstahlschutz (25) nach Anspruch 1, **dadurch gekennzeichnet, dass** das Verklemmungselement (31) gepresst gemäß einer Achse (38), die im Wesentlichen quer zu der Translationsachse (15) des Riegels (13) verläuft, und gemäß einer Achse (37), deren Richtung im Wesentlichen senkrecht zu der Translationsachse (15) des Riegels verläuft, montiert ist.

3. Vorrichtung zum Diebstahlschutz (25) nach einem der Ansprüche 1 oder 2, **dadurch gekennzeichnet, dass** das Verklemmungselement (31) des Weiteren ausgestaltet ist, sich mindestens teilweise außerhalb der Halterung (5) der Vorrichtung zum Diebstahlschutz bei einer Loslösung des Kontaktschlosses (7) und der Halterung (5) von der Vorrichtung zum Diebstahlschutz zu verschieben.

4. Vorrichtung zum Diebstahlschutz (25) nach einem der Ansprüche 1 bis 3, **dadurch gekennzeichnet, dass** das Verklemmungselement (31) elastisch ist und einen Elastizitätsmodul aufweist, der zwischen 100 MPa und 300 MPa beträgt.

5. Vorrichtung zum Diebstahlschutz (25) nach einem der Ansprüche 1 bis 4, **dadurch gekennzeichnet, dass** die Rille (47) mit einem Boden (33) des Kragens (11) der Halterung (5) durch eine Abschrägung (49) verbunden ist.

6. Vorrichtung zum Diebstahlschutz (25) nach einem der Ansprüche 1 bis 5, **dadurch gekennzeichnet, dass** das Verklemmungselement (31) mindestens eine Sicherungszone (53) aufweist, die ausgestaltet ist, das Verklemmungselement (31) zu brechen, wenn eine Zugkraft auf das Verklemmungselement ausgeübt wird.

7. Vorrichtung zum Diebstahlschutz (25) nach einem der Ansprüche 1 bis 6, **dadurch gekennzeichnet, dass** das Verklemmungselement (31) aus einem Metallkabel (55) besteht, vorzugsweise aus Stahl.

8. Vorrichtung zum Diebstahlschutz (25) nach Anspruch 7, **dadurch gekennzeichnet, dass** das Metallkabel (55) tangential auf die umlaufende Wand (39) des Kontaktschlosses (7) drückt, wenn sich die Vorrichtung zum Diebstahlschutz in Ruheposition befindet.

9. Vorrichtung zum Diebstahlschutz (25) nach einem der Ansprüche 1 bis 8, **dadurch gekennzeichnet, dass** der Körper (9) der Halterung (5) der Vorrichtung aus Kunststoff ist und dadurch, dass der Kragen (11) der Halterung der Vorrichtung aus "Zamak®"-Material ist.

10. Lenksäule (3) für ein Kraftfahrzeug, **dadurch gekennzeichnet, dass** sie eine Vorrichtung zum Diebstahlschutz (25) nach einem der Ansprüche 1 bis 9 umfasst.

## Claims

1. An antitheft device (25) for a steering column (3) of a motor vehicle comprising:
- a support (5), comprising:
• an antitheft body (9), and
• a collar (11), fastened to the antitheft body,
- a pin (13), partially housed within the collar, mounted movable in translation in the antitheft device along an axis of translation (15) of the pin, alternately between a locking position according to which said pin (13) blocks the rotation of the steering column and an unlocking position according to which said pin enables the rotation of the steering column,
- a contact lock (7), secured to the support (5) of the antitheft device and arranged so as to displace the pin (13) alternately between said locking position and said unlocking position, said contact lock (7) being adapted to be handled by a user,
- a member (31) for deadlocking the pin, mounted in the support of the antitheft device compressed along at least one axis (37, 38) substantially orthogonal to the axis of translation (15) of the pin (13) and held compressed at least by a peripheral wall (39) of said lock (7), defining a rest position of the antitheft device according to which the deadlocking member (31) enables a displacement of the pin (13), the deadlocking member (31) being further designed so as to loosen up during a detachment from the contact lock (7) and from the support (5) of the antitheft device and to block the translation of said pin (13), so as to define a deadlocking position of the antitheft device,
the antitheft device (25) being **characterized in that** the collar of the support (5) of said device includes a groove (47) extending in a direction substantially parallel to the axis of translation (15) of the pin (13), receiving a portion (51) of the deadlocking member (31) when the antitheft device is in the deadlocking position.

2. The antitheft device (25) according to claim 1, **characterized in that** the deadlocking member (31) is mounted compressed according to an axis (38) with a direction substantially transverse to the axis of translation (15) of the pin (13) and according to an axis (37) with a direction substantially perpendicular to said axis of translation (15) of the pin.

3. The antitheft device (25) according to any of claims 1 or 2, **characterized in that** the deadlocking member (31) is further designed so as to translate at least partially outside the support (5) of the antitheft device during a detachment from the contact lock (7) and from the support (5) of the antitheft device.

4. The antitheft device (25) according to any one of claims 1 to 3, **characterized in that** the deadlocking member (31) is elastic and has an elasticity module comprised between 100 MPa and 300 MPa.

5. The antitheft device (25) according to any one of claims 1 to 4, **characterized in that** the groove (47) is connected to a bottom (33) of the collar (11) of the support (5) by a chamfer (49).

6. The antitheft device (25) according to any one of claims 1 to 5, **characterized in that** the deadlocking member (31) has at least one fuse area (53) designed so as to break up the deadlocking member (31) when a tensile force is exerted on the deadlocking member.

7. The antitheft device (25) according to any one of claims 1 to 6, **characterized in that** the deadlocking member (31) consists of a metallic cable (55), preferably made of steel.

8. The antitheft device (25) according to claim 7, **characterized in that** the metallic cable (55) bears tangentially on the peripheral wall (39) of the contact lock (7) when the antitheft device is in the rest position.

9. The antitheft device (25) according to any one of claims 1 to 8, **characterized in that** the body (9) of the support (5) of said device is made of plastic and **in that** the collar (11) of the support of said device is made of a « Zamak® » material.

10. A steering column (3) for a motor vehicle, **characterized in that** it comprises an antitheft device (25) according to any one of claims 1 to 9.
